# EUROPEAN PATENT APPLICATION

(11) **EP 4 432 720 A1**
(43) Date of publication of application: **18.09.2024**
(21) Application number: 22906182.5
(22) Date of filing: 18.11.2022
(51) Int. Cl.: H04W 24/02

(54) **ADAPTATION METHOD FOR NE-DC ARCHITECTURE, AND OPERATION CONTROL APPARATUS, BASE STATION DEVICE AND STORAGE MEDIUM**

(30) Priority: 13.12.2021 CN 202111517647
(71) Applicant: ZTE Corporation, Shenzhen, Guangdong 518057 (CN)
(72) Inventor: QIU, Gang, Shenzhen, Guangdong 518057 (CN); DU, Gaopeng, Shenzhen, Guangdong 518057 (CN); WU, Feng, Shenzhen, Guangdong 518057 (CN); SI, Wei, Shenzhen, Guangdong 518057 (CN)
(74) Representative: Savi, Massimiliano
(86) International application number: PCT/CN2022/132947
(87) International publication number: WO 2023/109430

(57) **Abstract**

Disclosed in the present disclosure are an adaptation method for an NE-DC architecture, and an operation control apparatus, a base station apparatus and a storage medium. The adaptation method is applied to a 4G base station, which has an adaptation module embedded therein. The adaptation method applied to the 4G base station comprises: receiving a message from a 5G base station, wherein the message comprises first information, which is 5G conceptual information (S 100); delivering the message to an adaptation module (S200); and converting, by means of the adaptation module, the first information in the message into second information that may be recognized and operated by an LTE system (S300).

## Description

### CROSS-REFERENCE TO RELATED APPLICATION

This application is filed on the basis of Chinese patent application No. 202111517647.8 filed on December 13, 2021, and claims priority of the Chinese patent application. The contents of Chinese application are incorporated herein by reference in its entirety.

### TECHNICAL FIELD

The present disclosure relates to the field of communication, in particular to an adaptation method for an NR-E-UTRA Dual Connectivity (NE-DC) architecture, an operation control apparatus, a base station device and a storage medium.

### BACKGROUND

At present, there are multiple network deployment options in the evolution path from 4G to 5G. In Option 4, one of the options in the 5G architecture, the 5G core network serves as the core network, 5G base stations serve as the primary stations, and 4G base stations serve as the secondary stations. Communication between 5G and 4G base stations is achieved through the NE-DC function. However, to support Option 4, according to the requirements of the 3rd Generation Partnership Project (3GPP), the Long Term Evolution (LTE) network of 4G base stations is required to be upgraded to an Enhanced LTE (eLTE) network, which increases the resource consumption for operators to upgrade the existing LTE and complexity to the implementation for equipment vendors.

### SUMMARY

The present disclosure aims to solve at least one of the technical problems in the existing technology by providing an adaptation method for an NE-DC architecture, an operation control apparatus, a base station device and a storage medium.

In accordance with a first aspect of the present disclosure, an embodiment provides an adaptation method for an NE-DC architecture, applied to a 4G base station, including: receiving a message from a 5G base station, the message containing first information, and the first information being 5G concept information; forwarding the message to the adaptation module; and converting, by the adaptation module, the first information in the message into second information recognizable and executable by an LTE network.

In accordance with a second aspect of the present disclosure, an embodiment provides an operation control apparatus, including at least one control processor and a memory for communicating with the at least one control processor; and the memory stores instructions executable by the at least one control processor, and the instructions, when executed by the at least one control processor, cause the at least one control processor to execute the adaptation method for the NE-DC architecture as described in the embodiment according to the first aspect of the present disclosure.

In accordance with a third aspect of the present disclosure, an embodiment provides a base station device, including the operation control apparatus as described in the embodiment according to the second aspect of the present disclosure.

In accordance with a fourth aspect of the present disclosure, an embodiment provides a computer-readable storage medium storing computer-executable instructions which cause a computer to execute the adaptation method for the NE-DC architecture as described in the embodiment according to the first aspect of the present disclosure.

Additional features and advantages of the present disclosure will be set forth in the subsequent description, and in part will become apparent from the description, or may be learned by practice of the embodiments of the present disclosure. The purposes and other advantages of the present disclosure can be realized and obtained by structures particularly noted in the description, the claims and the accompanying drawings.

### BRIEF DESCRIPTION OF DRAWINGS

The accompanying drawings are provided for an understanding of the technical schemes of the present disclosure and constitute a part of the description. The accompanying drawings and the embodiments of the present disclosure are used to explain the technical schemes of the present disclosure, and do not constitute a restriction on the technical schemes of the present disclosure.

The present disclosure will be explained in conjunction with the attached drawings and embodiments.
FIG. 1 is a schematic diagram of an NE-DC architecture according to an embodiment of the present disclosure;
FIG. 2 is a flowchart of an adaptation method for an NE-DC architecture according to an embodiment of the present disclosure;
FIG. 3 is a flowchart of some steps of an adaptation method for an NE-DC architecture according to another embodiment of the present disclosure;
FIG. 4 is a flowchart of adaptation according to another embodiment of the present disclosure;
FIG. 5 is a flowchart of adaptation according to another embodiment of the present disclosure;
FIG. 6 is a flowchart of an adaptation method for an NE-DC architecture according to another embodiment of the present disclosure;
FIG. 7 is a flowchart of substeps of an adaptation method for an NE-DC architecture according to another embodiment of the present disclosure;
FIG. 8 is a flowchart of substeps of an adaptation method for an NE-DC architecture according to another embodiment of the present disclosure;
FIG. 9 is a flowchart of adaptation according to another embodiment of the present disclosure;
FIG. 10 is a flowchart of substeps of an adaptation method for an NE-DC architecture according to another embodiment of the present disclosure;
FIG. 11 is a flowchart of adaptation according to another embodiment of the present disclosure; and
FIG. 12 is a schematic diagram of an operation control apparatus according to another embodiment of the present disclosure.

### DETAILED DESCRIPTION

This section will describe specific embodiments of the present disclosure in detail, and embodiments of the present disclosure are shown in the accompanying drawings. The accompanying drawings are used to supplement the text description of the specification with graphic illustrations, so that each technical feature and the overall technical scheme of the present disclosure can be intuitively and vividly understood. However, the accompanying drawings should not be construed as limiting the scope of protection application the present disclosure.

In the description of the present disclosure, the terms such as "first", "second" and "third" is solely used for the purpose of distinguishing technical features and should not be construed as indicating or implying relative importance or implicitly indicating the number of indicated technical features or implicitly indicating the sequence of indicated technical features.

In the description of the present disclosure, unless otherwise explicitly defined, the terms such as "arrange", "install", and "connect" should be construed in a broad sense, and those having ordinary skill in the art can determine the specific meanings of the above terms in the present disclosure in a rational way in conjunction with the specific contents of the technical schemes.

The standardization of 5G is currently underway, and the evolution of 5G is rather complex. Eight 5G network architectures have been proposed. The deployment of 5G networks cannot be accomplished overnight and needs to proceed gradually. Currently, the deployment of 4G LTE networks is widespread. In order to avoid high short-term investment and reduce deployment risks, most operators adopt a 5G network architecture that preserves LTE networks. Option 4 is one of the 5G network architectures, known as the NE-DC architecture. Option 4 introduces both the 5G core network and 5G base stations. However, 5G base stations do not directly replace 4G base stations. In Option 4, the 5G core network serves as the core network, 5G base stations serve as primary stations, and 4G base stations serve as secondary stations. Communication between 5G and 4G base stations is achieved through the NE-DC function. There is no NG-U channel between 4G base stations and the 5G core network, so that media data from the 5G core network cannot be sent to 4G base stations. Data from the 5G core network can only be sent to 5G base stations, which in turn distribute the data to 4G base stations via XN-U channels. According to the regulations of 3GPP, in the NE-DC scenario, the 4G LTE network must be upgraded to an eLTE network. That is, the LTE network is required to incorporate 5G protocol layers and have the capability to exchange signaling and data with the 5G core network. It is essential to introduce the Service Discovery Application Profile (SDAP) protocol layer, the 5G Quality of Service (QoS) architecture, Session, QoS Flow, RRC inactive status, etc. The eLTE network must have the ability to handle control signaling and media data for NG (the interface between the wireless access network and the 5G core network) and XN (the network interface between NG-RAN nodes). However, for Option 4, the 4G LTE network does not have an NG interface with the 5G core network and does not transmit control signaling and media data, under this architecture, so it only needs to support the XN media data processing capability of the eLTE network, and there is no need to support the control signaling of NG, or the control signaling and media data processing capability of XN. Hence, upgrading the LTE network to an eLTE network not only increases the resource consumption for operators to upgrade from the original LTE but also complexity to the implementation for device vendors.

In view of this, embodiments of the present disclosure provide an adaptation method for an NE-DC architecture, an operation control apparatus, a base station device and a storage medium, enabling the fulfillment of NE-DC functionality without upgrading LTE, thereby simplifying the implementation of the NE-DC architecture.

The embodiments of the present disclosure will be described below with reference to the accompanying drawings.

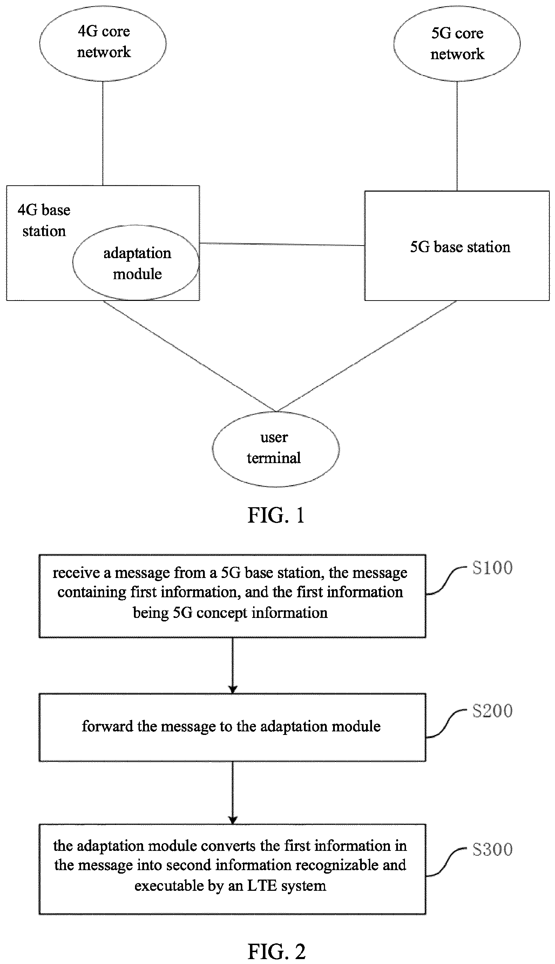

Please refer to FIG. 1, which is a schematic diagram of an NE-DC architecture according to an embodiment of the present disclosure. In the architecture, a 5G core network serves as the core network, a user terminal is connected to a 5G base station as a primary station, and a 4G base station as a secondary station. There is no GN-U channel between the 4G base station and the 5G core network. The 4G base station is connected to the 5G base station through an XN interface. The 4G base station is embedded with an adaptation module, which can adapt 5G concept information in control signaling sent by the 5G base station to the 4G base station in the NE-DC architecture of Option 4. The 5G information is converted into information recognizable and executable by a 4G LTE system, enabling the proper functioning of the NE-DC feature.

It should be noted that a switch of the adaptation module needs to be configured on a network management system. No additional hardware needs to be added to 4G base stations for this adaptation module. Only a separate software module is added. The NE-DC architecture provided in this embodiment is easy to implement, and it does not necessitate upgrading the LTE network of 4G base stations to an eLTE network, thereby reducing the consumption of physical memory resources in the LTE system of 4G base stations and minimizing the decrease in RRC specifications in the LTE system.

Please refer to FIG. 2, which illustrates an adaptation method for an NE-DC architecture according to an embodiment of the present disclosure. The adaptation method is applied to a 4G base station, in which an adaptation module is embedded. The adaptation method includes but is not limited to S100, S200, and S300.

At S100, a message from a 5G base station is received. The message contains first information, which is 5G concept information.

It should be noted that the message may be an SN Addition Request message or an SN Modification Request message, and the first information varies depending on the scenario.

At S200, the message is forwarded to the adaptation module.

At S300, the adaptation module converts the first information in the message into second information recognizable and executable by an LTE system.

In an embodiment, a 5G base station sends a message containing first information to a 4G base station. The first information is 5G concept information. The 4G base station receives the message and forwards the message to an adaptation module. The adaptation module in turn converts the first information in the message into second information recognizable and executable by a 4G LTE system. That is, the 4G base station can execute and recognize the 5G concept information from the 5G base station through the adaptation module, enabling the proper functioning of the NE-DC feature.

It should be noted that in a 5G architecture, a 4G base station needs to recognize 5G concept information from a 5G New Radio (NR), and according to 3GPP, the LTE network needs to be upgraded to an eLTE network. However, in the NE-DC architecture of Option 4 according to the embodiment, the NE-DC feature is realized by embedding the adaptation module in the 4G base station, and the LTE network does not need to be upgraded to an eLTE network, such that Option 4 in the 5G architecture is easy to implement. That is, the NE-DC architecture is easier to implement. Further, the consumption of physical memory resources in the LTE system of 4G base stations is reduced, so that the decrease in RRC specifications in the LTE system is minimized.

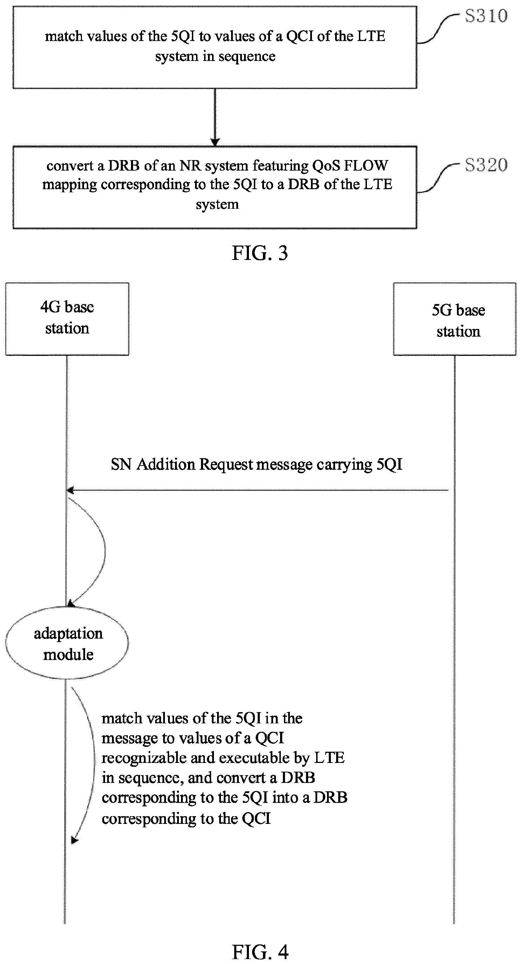

In an embodiment, in response to the first information being a 5QI of a QoS parameter corresponding to a QoS Flow ID, as shown in FIG. 3, an embodiment of the present disclosure provides an adaptation method for an NE-DC architecture. Here, S310 in FIG. 3 is a substep of S300 in FIG. 2, and the adaptation method further includes S320.

At S310, values of the 5QI are matched to values of a QoS Class Identifier (QCI) of the LTE system in sequence.

At S320, a Data Radio Bearer (DRB) of an NR system of an QoS Flow mapping corresponding to the 5QI is converted to a DRB of the LTE system.

It should be noted that the 5QI is the 5G concept information, specifically referring to a 5G QoS attribute, with values ranging from 0 to 255; and the QCI is the information recognizable and executable by the LTE network, with values ranging from 0 to 255. The adaptation module sequentially converts 5QI values into equivalent QCI values.

It should also be noted that in the 5G NR system, there exists a mapping relationship between 5QIs and DRBs, similar to the mapping between QCIs and DRBs in 4G LTE. In order to ensure the proper functioning of the NE-DC feature, it is necessary not only to convert 5QIs to QCIs but also to match QCIs with appropriate DRBs.

In an embodiment, a 4G base station receives a message from a 5G base station, which contains a 5QI of a QoS parameter corresponding to a QoS Flow ID; and the 4G base station in turn forwards the message to an adaptation module, such that the adaptation module matches values of the 5QI to values of a QCI in sequence, and converts a DRB of an NR system of a QoS Flow mapping corresponding to the 5QI to a DRB of an LTE system corresponding to the QCI, so as to realize the NE-DC feature. The 4G base station does not upgrade the LTE network to an eLTE network, and control signaling of the 5G base station can also be recognized through the adaptation module.

It should be noted that the message from the 5G base station may be an SN Addition Request message or an SN Modification Request message.

In an embodiment, in response to the message from the 5G base station carrying a mapping relationship between the QoS Flow and the DRB of the NR system, the adaptation module directly converts the DRB of the NR system in the mapping relationship into the DRB of the LTE system, and the converted DRB is mapped to the QCI.

In an embodiment, in response to the message from the 5G base station not carrying the mapping relationship between the QoS Flow and the DRB of the NR system, the adaptation module reassigns a DRB for the LTE system from a range of backup DRBs in a network management system.

It will be understood by those having ordinary skill in the art that when reassigning DRBs for the LTE system, it is essential to ensure that the range of backup DRBs configured in the network management system does not overlap with the range of DRBs in the NR system.

Please refer to FIG. 4, which depicts the adaptation process for secondary station addition under Option 4. In an embodiment of the present disclosure, the NE-DC mode is configured as Option 4 in a network management system, and an adaptation module is enabled. A 5G base station receives measurement reports from user terminals and initiates dual connectivity addition to a 4G base station. The 5G base station sends an SN Addition Request message to the 4G base station, which is embedded with the adaptation module; and the 4G base station forwards the SN Addition Request message to the adaptation module, so that the adaptation module then matches values of a 5QI of a QoS parameter corresponding to a QoS Flow ID carried in the message to values of a QCI of an LTE system in sequence. In response to the message carrying a mapping relationship between the QoS Flow and the DRB of the NR system, the adaptation module directly converts the DRB of the NR system in the mapping relationship into the DRB of the LTE system; otherwise, in response to the message not carrying the mapping relationship between the QoS Flow and the DRB of the NR system, the adaptation module reassigns a DRB for the LTE system from a range of backup DRBs in the network management system, such that the converted DRB and the converted QCI form a mapping relationship. The adaptation module returns the converted QCI and the DRB mapped from the QCI to the LTE system, such that the LTE system of the 4G base station can recognize and execute the SN Addition Request message from the 5G base station, enabling proper functioning of the NE-DC feature.

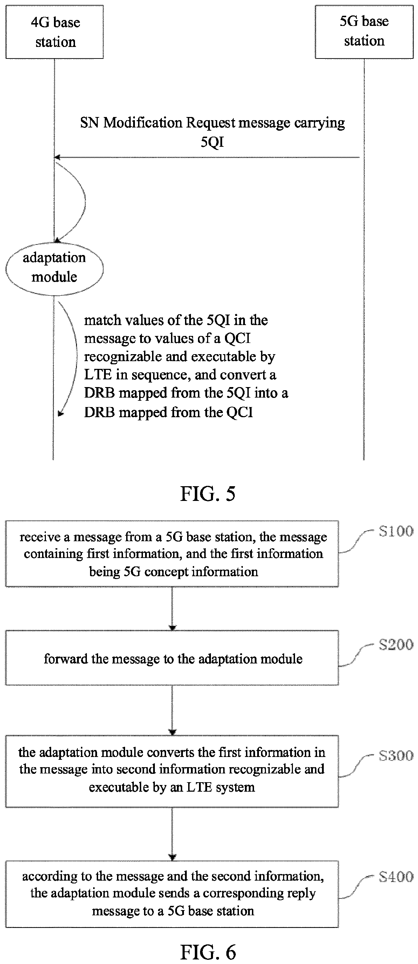

Please refer to FIG. 5, which depicts the adaptation process for secondary station modification under Option 4. In another embodiment of the present disclosure, the NE-DC mode is configured as Option 4 in a network management system, and an adaptation module is enabled. A 5G base station sends an SN Modification Request message to a 4G base station, which is embedded with the adaptation module. The 4G base station forwards the SN Modification Request message to the adaptation module, so that the adaptation module then matches values of a 5QI of a QoS parameter corresponding to a QoS Flow ID carried in the message to values of a QCI of an LTE system in sequence. In response to the message carrying a mapping relationship between the QoS Flow and the DRB of the NR system, the adaptation module directly converts the DRB of the NR system in the mapping relationship into the DRB of the LTE system; otherwise, in response to the message not carrying the mapping relationship between the QoS Flow and the DRB of the NR system, the adaptation module reassigns a DRB for the LTE system from a range of backup DRBs in the network management system, such that the converted DRB and the converted QCI form a mapping relationship. The adaptation module returns the converted QCI and the DRB mapped from the QCI to the LTE system, such that the LTE system of the 4G base station can recognize and execute the SN Modification Request message from the 5G base station, enabling proper functioning of the NE-DC feature.

Referring to FIG. 6, another embodiment of the present disclosure provides an adaptation method for an NE-DC architecture, which further includes S400.

At S400, according to the message from the 5G base station and the second information, the adaptation module sends a corresponding reply message to the 5G base station.

In an embodiment, a 5G base station sends a message to a 4G base station, and the 4G base station needs to return a corresponding reply message to the 5G base station. The 4G base station converts 5G concept information in the message from the 5G base station into second information recognizable and executable by an LTE system through an adaptation module, then generates a reply message through the adaptation module according to the content of the message from the 5G base station and the converted second information, and sends the reply message to the 5G base station. Therefore, the 4G base station can realize the NE-DC feature through the adaptation module to recognize and execute the message from the 5G base station, and send the reply message containing the 5G concept information to the 5G base station through the adaptation module without upgrading the LTE network to an eLTE network, thus enabling proper functioning of the NE-DC feature and making the NE-DC architecture easy to implement.

It should be noted that the reply message contains the 5G concept information, and the adaptation module generates the reply message and returns the reply message to the LTE system of the 4G base station, which in turn sends the reply message to the 5G base station.

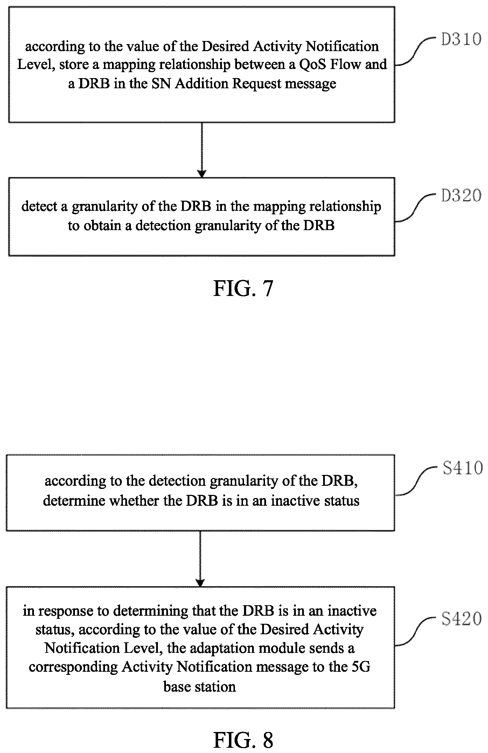

In an embodiment, in response to the message from the 5G base station being an SN Addition Request message and the first information being a value of a Desired Activity Notification Level, as shown in FIG. 7 which is a flowchart of substeps of S300 in FIG. 6, S300 includes but is not limited to D310 and D320.

At D310, according to the value of the Desired Activity Notification Level, a mapping relationship between a QoS Flow and a DRB in the SN Addition Request message is stored.

At D320, a granularity of the DRB in the mapping relationship is detected to obtain a detection granularity of the DRB.

As shown in FIG. 8 which is a flowchart of substeps of S400 in FIG. 6, S400 includes but is not limited to S410 and S420.

At S410, according to the detection granularity of the DRB, it is determined whether the DRB is in an inactive status.

At S420, in response to determining that the DRB is in an inactive status, according to the value of the Desired Activity Notification Level, the adaptation module sends a corresponding Activity Notification message to the 5G base station.

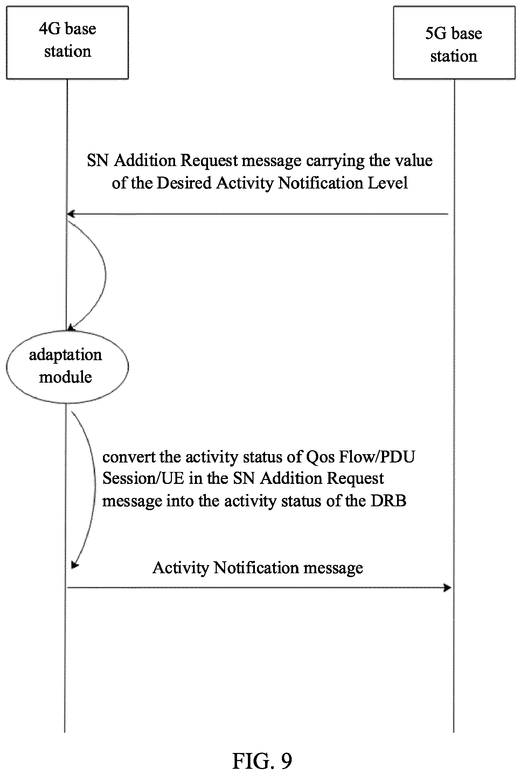

Detailed description will be given below with reference to the attached drawings. As shown in FIG. 9 which is a flowchart of adaptation in a user inactive scenario of Option 4, in an embodiment, the NE-DC mode is configured as Option 4 in a network management system, and an adaptation module is enabled. In the user inactive scenario of Option 4, a 5G base station sends an SN Addition Request message to a 4G base station, and first information in the message is a value of a Desired Activity Notification Level. The 4G base station receives the SN Addition Request message and forwards the message to the adaptation module, which can convert the QoS Flow, PDU Session or the activity status of UE in the SN Addition Request message into the activity status of a DRB according to the value of the Desired Activity Notification Level. That is, according to the value of the Desired Activity Notification Level, a mapping relationship between a QoS Flow and a DRB in the SN Addition Request message is saved, and a granularity of the DRB in the mapping relationship is detected to obtain a detection granularity of the DRB, which is then returned to the LTE system of the 4G base station. The 4G base station can confirm that the DRB is in an inactive status according to the detection granularity of the DRB. In response to determining that the DRB is in an inactive status, according to the value of the Desired Activity Notification Level, the adaptation module sends a corresponding Activity Notification message to the 5G base station.

It should be noted that the mapping relationship stored by the adaptation module varies depending on the value of the Desired Activity Notification Level. Accordingly, the detection scope of the DRB varies, and the content of the Activity Notification message sent from the 4G base station to the 5G base station varies.

It should also be noted that the Activity Notification message contains 5G concept information, and the 4G base station makes the adaptation module generate the Activity Notification message, which is returned by the adaptation module to the LTE system of the 4G base station. Then, the 4G base station sends the Activity Notification message to the 5G base station. It should be understood by those having ordinary skill in the art that although this process is not shown in FIG. 9, it does not constitute a limitation on this embodiment.

In an embodiment, in response to the value of the Desired Activity Notification Level being a QoS Flow, the adaptation module stores a mapping relationship between the QoS Flow and a DRB in the SN Addition Request message, detects the granularity of the DRB in the mapping relationship to obtain the detection granularity of the DRB, and returns the detection granularity of the DRB to the LTE system of the 4G base station; and the 4G base station can determine that the DRB mapped from the QoS Flow is in an inactive status according to the detection granularity of the DRB, and takes the activity status of the DRB as the activity status of the QoS Flow, such that the adaptation module generates a first Activity Notification message carrying the QoS Flow, and returns the first Activity Notification message to the LTE system of the 4G base station, which in turn sends the first Activity Notification message to the 5G base station.

In another embodiment, in response to the value of the Desired Activity Notification Level being a Protocol Data Unit (PDU) Session, the adaptation module stores a mapping relationship between a QoS Flow and a DRB in the PDU Session in the SN Addition Request message, detects the granularity of the DRB in the mapping relationship to obtain the detection granularity of the DRB, and returns the detection granularity of the DRB to the LTE system of the 4G base station. The 4G base station can determine that the DRB mapped from the QoS Flow in the PDU Session is in an inactive status according to the detection granularity of the DRB, and takes the activity status of the DRB as the activity status of the PDU Session, such that the adaptation module generates a second Activity Notification message which carries the PDU Session and indicates that the PDU Session is in an inactive status, and returns the second Activity Notification message to the LTE system of the 4G base station, which in turn sends the second Activity Notification message to the 5G base station.

In another embodiment, in response to the value of the Desired Activity Notification Level being a User Device (UE), the adaptation module stores a mapping relationship between a QoS Flow and a DRB in all PDU Sessions of the UE in the SN Addition Request message, detects the granularity of the DRB in the mapping relationship to obtain the detection granularity of the DRB, and returns the detection granularity of the DRB to the LTE system of the 4G base station. The 4G base station can determine that the DRB mapped from the QoS Flow in all PDU Sessions of the UE is in an inactive status according to the detection granularity of the DRB, and takes the activity status of the DRB as the activity status of the UE, such that the adaptation module generates a third Activity Notification message indicating that the UE is in an inactive status, and returns the third Activity Notification message to the LTE system of the 4G base station, which in turn sends the third Activity Notification message to the 5G base station.

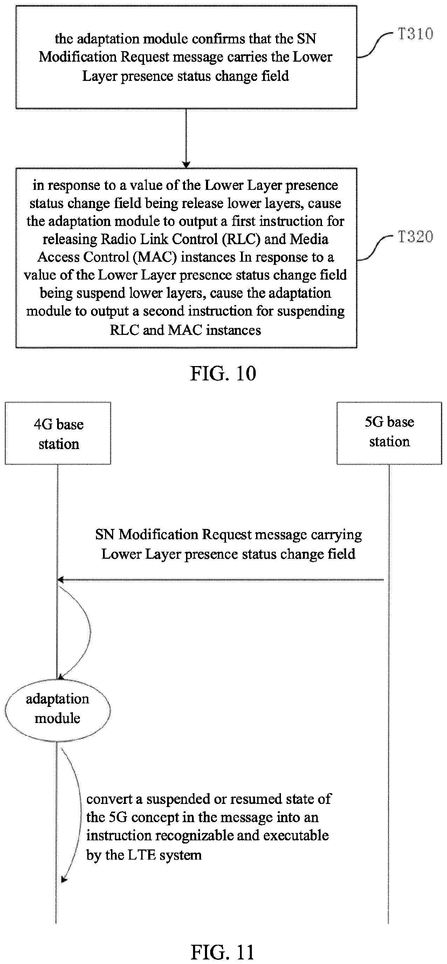

Referring to FIG. 10, in response to the message from the 5G base station being an SN Modification Request message and the first information being a Lower Layer presence status change field, another embodiment of the present disclosure provides an adaptation method for an NE-DC architecture. FIG. 10 is a flowchart of substeps of S300 in FIG. 2, and S300 includes but is not limited to T310 and T320.

At T310, the adaptation module confirms that the SN Modification Request message carries the Lower Layer presence status change field.

At T320, in response to a value of the Lower Layer presence status change field being release lower layers, the adaptation module outputs a first instruction for releasing Radio Link Control (RLC) and Media Access Control (MAC) instances; and in response to a value of the Lower Layer presence status change field being suspend lower layers, the adaptation module outputs a second instruction for suspending RLC and MAC instances.

Detailed description will be given below with reference to the attached drawings. As shown in FIG. 11 which is a flowchart of adaptation in an RRC inactive scenario of Option 4, in an embodiment of the present disclosure, when a 5G base station makes a user terminal in an RRC inactive status according to the strategy, a 4G base station is informed through a Lower Layer presence status change in an SN Modification Request, that is, the 5G base station sends an SN Modification Request message carrying a Lower Layer presence status change field to the 4G base station, which receives the SN Modification Request message and forwards the message to an adaptation module, and the adaptation module determines that the SN Modification Request message carries the Lower Layer presence status change field. In response to a value of the Lower Layer presence status change being release lower layers, the adaptation module outputs a first instruction and returns the first instruction to an LTE system of the 4G base station, so that the 4G base station can release RLC and MAC instances according to the first instruction; and in response to the value of the Lower Layer presence status change being suspend lower layers, the adaptation module outputs a second instruction and returns the second instruction to the LTE system of the 4G base station, so that the 4G base station can suspend RLC and MAC instances according to the second instruction.

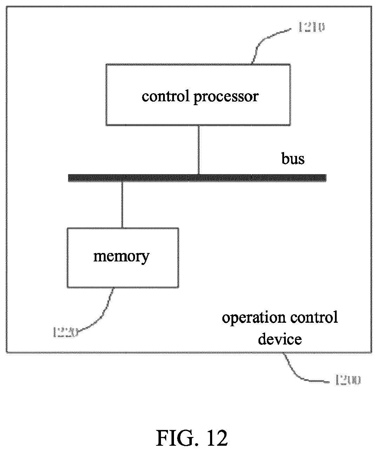

Referring to FIG. 12, an embodiment of the present disclosure further provides an operation control apparatus 1200, including at least one control processor 1210 and a memory 1220 communicating with the at least one control processor 1210; and the memory 1220 stores instructions executable by the at least one control processor 1210, and the instructions, when executed by the at least one control processor 1210, cause the at least one control processor 1210 to execute the adaptation method for the NE-DC architecture as described in the above embodiment. The operation control apparatus 1200 can execute the adaptation method for the NE-DC architecture provided in the embodiments of the present disclosure. A 4G base station is embedded with an adaptation module. Under Option 4, the 4G base station receives a message containing 5G concept information from a 5G base station. The 4G base station forwards the message to the adaptation module, and through the adaptation module, the 5G concept information in the message is converted into information recognizable and executable by a 4G LTE network. This allows for the establishment of the NE-DC architecture with 5G base stations without upgrading the LTE network to an eLTE network, realizing the NE-DC feature. By avoiding LTE upgrade to eLTE and only adding an adaptation module, the consumption of physical memory resources in the LTE system is reduced, so that the decrease in RRC specifications in the LTE system is minimized, and the NE-DC architecture is easier to implement.

An embodiment of the present disclosure further provides a base station device including the operation control apparatus as described in the above embodiment. The base station device can execute the adaptation method for the NE-DC architecture provided in the embodiments of the present disclosure. A 4G base station is embedded with an adaptation module. Under Option 4, the 4G base station receives a message containing 5G concept information from a 5G base station. The 4G base station forwards the message to the adaptation module, and through the adaptation module, the 5G concept information in the message is converted into information recognizable and executable by a 4G LTE network. This allows for the establishment of the NE-DC architecture with 5G base stations without upgrading the LTE network to an eLTE network, realizing the NE-DC feature. By avoiding LTE upgrade to eLTE and only adding an adaptation module, the consumption of physical memory resources in the LTE system is reduced, so that the decrease in RRC specifications in the LTE system is minimized, and the NE-DC architecture is easier to implement.

An embodiment of the present disclosure further provides a computer-readable storage medium storing computer-executable instructions which cause a computer to execute the adaptation method for the NE-DC architecture as described in the above embodiment.

It can be understood by those of ordinary skill in the art that all or some of the steps of the methods and systems disclosed above may be implemented as software, firmware, hardware, and appropriate combinations thereof. Some or all of the physical components may be implemented as software executed by a processor, such as a central processing unit, a digital signal processor or a microprocessor, or as hardware, or as an integrated circuit, such as an application-specific integrated circuit. Such software may be distributed on a computer-readable media, which may include computer-readable storage media or non-transitory media and communication media or transitory media. As well known to those having ordinary skill in the art, the term computer-readable storage medium includes volatile and nonvolatile, removable and non-removable media implemented in any method or technique for storing information, such as computer-readable instructions, data structures, program modules or other data. A computer-readable storage medium includes but is not limited to RAM, ROM, EEPROM, flash memory or other memory technologies, CD-ROM, digital versatile disk (DVD) or other optical disk storage, cassettes, magnetic tapes, magnetic disk storage or other magnetic storage apparatuses, or any other medium that can be configured to store desired information and can be accessed by a computer. Furthermore, it is well known to those of ordinary skill in the art that communication media typically contain computer-readable instructions, data structures, program modules or other data in a modulated data signal such as a carrier wave or other transmission mechanism, and may include any information transmission media.

Although the embodiments of the present disclosure have been described in detail above with reference to the accompanying drawings, the present disclosure is not limited to the above embodiments, and various changes may be made within the knowledge of those of ordinary skill in the art without departing from the purpose of the present disclosure.

## Claims

1. An adaptation method for an NR-E-UTRA Dual Connectivity, NE-DC, architecture which is applied to a 4G base station, the 4G base station comprising an adaptation module, and the adaptation method comprising:
receiving a message from a 5G base station, wherein the message contains first information, and the first information is 5G concept information;
forwarding the message to the adaptation module; and
converting, by the adaptation module, the first information in the message into second information recognizable and executable by a Long Term Evolution, LTE, system.

2. The adaptation method for the NE-DC architecture of claim 1, wherein in response to the first information being a 5QI of a Quality of Service, QoS, parameter corresponding to a QoS Flow ID, converting, by the adaptation module, the first information into second information recognizable and executable by an LTE system comprises:
matching values of the 5QI to values of a QoS Class Identifier, QCI, of the LTE system in sequence; and
the adaptation method further comprises:
converting a Data Radio Bearer, DRB, of a New Radio, NR, system of a QoS Flow mapping corresponding to the 5QI to a DRB of the LTE system.

3. The adaptation method for the NE-DC architecture of claim 2, wherein converting a DRB of an NR system of a QoS Flow mapping to a DRB of the LTE system comprises:
in response to the message carrying a mapping relationship between the QoS Flow and the DRB of the NR system, converting the DRB of the NR system in the mapping relationship into the DRB of the LTE system; and
in response to the message not carrying the mapping relationship between the QoS Flow and the DRB of the NR system, reassigning a DRB for the LTE system from a range of backup DRBs in a network management system, the range of the backup DRBs not overlapping with a range of DRBs of the NR system.

4. The adaptation method for the NE-DC architecture of claim 1, further comprising:
according to the message and the second information, sending, by the adaptation module, a corresponding reply message to a 5G base station.

5. The adaptation method for the NE-DC architecture of claim 4, wherein in response to the message being an SN Addition Request message and the first information being a value of a Desired Activity Notification Level, converting, by the adaptation module, the first information into second information recognizable and executable by an LTE system comprises:
according to the value of the Desired Activity Notification Level, storing a mapping relationship between a QoS Flow and a DRB in the SN Addition Request message; and
detecting a granularity of the DRB in the mapping relationship to obtain a detection granularity of the DRB; and
according to the message and the second information, sending, by the adaptation module, a corresponding reply message to a 5G base station comprises:
according to the detection granularity of the DRB, determining whether the DRB is in an inactive status; and
in response to determining that the DRB is in an inactive status, according to the value of the Desired Activity Notification Level, sending, by the adaptation module, a corresponding Activity Notification message to the 5G base station.

6. The adaptation method for the NE-DC architecture of claim 5, wherein according to the value of the Desired Activity Notification Level, storing a mapping relationship between a QoS Flow and a DRB in the SN Addition Request message comprises:
in response to the value of the Desired Activity Notification Level being a QoS Flow, storing a mapping relationship between the QoS Flow and a DRB in the message;
in response to the value of the Desired Activity Notification Level being a Protocol Data Unit, PDU, Session, storing a mapping relationship between a QoS Flow and a DRB in the PDU Session in the message; and
in response to the value of the Desired Activity Notification Level being a User Device, UE, storing a mapping relationship between a QoS Flow and a DRB in all PDU Sessions of the UE in the message.

7. The adaptation method for the NE-DC architecture of claim 5, wherein in response to determining that the DRB is in an inactive status, according to the value of the Desired Activity Notification Level, sending, by the adaptation module, a corresponding Activity Notification message to the 5G base station comprises:
in response to the value of the Desired Activity Notification Level being a QoS Flow and determining that a DRB mapped from the QoS Flow is in an inactive status, generating, by the adaptation module, a first Activity Notification message carrying the QoS Flow, and sending the first Activity Notification message to the 5G base station;
in response to the value of the Desired Activity Notification Level being a PDU Session and determining that all DRBs mapped from a QoS Flow in the PDU Session are in an inactive status, generating, by the adaptation module, a second Activity Notification message carrying the PDU Session and indicating that the PDU Session is in an inactive status, and sending the second Activity Notification message to the 5G base station;
in response to the value of the Desired Activity Notification Level being a UE and determining that DRBs mapped from QoS Flows in all PDU sessions of the UE are all in an inactive status, generating, by the adaptation module, a third Activity Notification message indicating that the UE is in an inactive status, and sending the third Activity Notification message to the 5G base station.

8. The adaptation method for the NE-DC architecture of claim 1, wherein in response to the message being an SN Modification Request message and the first information being a Lower Layer presence status change field, converting, by the adaptation module, the first information in the message into second information recognizable and executable by an LTE system comprises:
confirming, by the adaptation module, that the SN Modification Request message carries the Lower Layer presence status change field;
in response to a value of the Lower Layer presence status change field being release lower layers, outputting, by the adaptation module, a first instruction for releasing Radio Link Control, RLC, and Media Access Control, MAC, instances; and
in response to a value of the Lower Layer presence status change field being suspend lower layers, outputting, by the adaptation module, a second instruction for suspending RLC and MAC instances.

9. An operation control apparatus, comprising at least one control processor and a memory communicating with the at least one control processor; wherein the memory stores instructions executable by the at least one control processor, and the instructions, when executed by the at least one control processor, cause the at least one control processor to execute the adaptation method for the NE-DC architecture of any one of claims 1-8.

10. A base station device, comprising the operation control apparatus of claim 9.

11. A computer-readable storage medium storing computer-executable instructions which, when executed by a processor, cause the processor to execute the adaptation method for the NE-DC architecture of any one of claims 1-8.
